# EUROPEAN PATENT APPLICATION

(11) **EP 4 462 753 A1**
(43) Date of publication of application: **13.11.2024**
(21) Application number: 23172920.3
(22) Date of filing: 11.05.2023
(51) Int. Cl.: H04L 65/1073, H04L 65/1094, H04L 65/1016, H04L 65/1069

(54) **METHOD FOR MANAGING AT LEAST ONE VOIP CALL AND A COMMUNICTAION SYSTEM**

(71) Applicant: Deutsche Telekom AG, 53113 Bonn (DE)
(72) Inventor: STEPANEK, Nicolas Walter, 64385 Reichelsheim (DE); THIES, Emil, 47166 Duisburg (DE)
(74) Representative: Blumbach · Zinngrebe Patentanwälte PartG mbB

(57) **Abstract**

A method is proposed for managing at least one VoIP call using a communication system (100; 100') that comprises an IP multimedia subsystem (30) and a cloud-based customer management system (60) registered on the IP multimedia subsystem (30), the method comprising the steps of:
a) establishing a VoIP session between a first device (70) and another VoIP party (20), wherein signaling is performed via the cloud-based customer management system (60),
b) sending, by the cloud-based customer management system (60), a call notification message for notifying about the established VoIP session to at least one second device (80, 90),
c) sending an event notification message to the cloud-based customer management system (60) from one of the second devices or from at least one third device,
d) in response to receiving the event notification message, performing, by the cloud-based customer management system (60), an action related to the ongoing call between the first device (70) and the other VoIP party (20).

Further, a cloud-based customer management system (60) and a communication system (100; 100') for performing the method are proposed.

## Description

The present invention is directed to a method for managing at least one VoIP call using a communication system that preferably comprises an IMS system (IP multimedia subsystem) and a cloud-based customer management system registered on the IMS system as well as a communication system in particular configured to perform the method.

### Background

Known telecommunications systems employ an IP multimedia subsystem (IMS), which for example supports access to different communication services and the establishment of VoIP sessions between user devices. The user devices involved in the VoIP sessions are directly and permanently registered on and connected to the IMS system.

### Summary of the Invention

It is an object of the present invention to provide a method and a communication system using an IMS system, wherein the method and the communication system enable an improved and/or flexible management of a VoIP call, while avoiding the need for VoIP capable devices associated with a customer to be directly and permanently registered on and connected to the IMS system.

The method and the communication system preferably enable a device, which is not capable to receive or handle a VoIP call, to be used to initiate a call transfer of an ongoing VoIP call. With special advantage, an automatic call transfer is enabled in a smart home environment.

A further advantage of the present invention is that user devices configured to participate in a VoIP call do not need a permanent connection to the communication system and the IMS system, respectively.

A core aspect of the invention can be seen in triggering a call transfer of an ongoing VoIP call by a device that is not included in the ongoing VoIP call and can even be a non-VoIP capable device. This is different from known call transfer scenarios, utilizing for instance the SIP protocol, in which a transfer are only triggered on devices included in the call. Another core aspect of the invention can be seen in employing smart home appliances for triggering an action related to an ongoing VoIP, wherein such action may be for example to play an audio announcement to the user.

The technical problem cited above is solved by the steps of claim 1 and further by the features of claims 14 and 15. Preferred embodiments are set forth in the dependent claims.

According to a preferred aspect, a method is provided, which uses in particular for managing at least one VoIP call a communication system that preferably comprises an IMS system (IP multimedia subsystem) and a cloud-based customer management system registered on the IMS system, wherein a VoIP capable device is associated with a customer. The method may comprise the steps of:
a) establishing a VoIP session between a first device that is associated with a customer and another VoIP party, wherein the first device is a VoIP capable device, and wherein an address, e.g. a phone number and/or an IP address, is assigned to the first device and registered together with an identifier of the customer on the cloud-based customer management system, wherein the identifier can be for example a unique identifier, and wherein signaling for establishing the VoIP session is performed via the cloud-based customer management system with the first device being either the calling party or the called party,
b) sending, by the cloud-based customer management system, a call notification message for notifying about the established VoIP session to at least one second device associated with the customer,
c) sending an event notification message to the cloud-based customer management system from one of the second devices or from at least one third device that is associated with the customer,
d) in response to receiving the event notification message, performing, by the cloud-based customer management system, an action related to the ongoing call between the first device and the other VoIP party.

Establishing the VoIP session between the first device and the other VoIP party may comprise the following steps, when the first device is the called party:
- receiving, at the IMS system, a VoIP session request message from the other VoIP party as calling party, wherein the VoIP session request message includes an SDP (session description information) offer and the address of the first device;
- forwarding, by the IMS system, the VoIP session request message to the cloud-based customer management system;
- sending or pushing, by the cloud-based customer management system, in response to the VoIP session request message a first notification message to the first device, the first notification message including an information of an incoming VoIP call;
- notifying, in response to the first notification message, the cloud-based customer management system, that the first device is prepared to accept the incoming VoIP call;
- forwarding, by the cloud-based customer management system, the VoIP session request message to the VoIP capable device;
- sending, by the first device, a message including an SDP answer in response to the SDP offer to the cloud-based customer management system;
- forwarding the SDP answer, by the cloud-based customer management system, to the IMS system.

Establishing the VoIP session between the first device and the other VoIP party may comprise the following steps, when the first device is the calling party:
- sending a VoIP session request message from the first device to the cloud-based customer management system, wherein the VoIP session request message includes an SDP offer and the address of the other VoIP party;
- forwarding, by the cloud-based customer management system, the VoIP session request message to the IMS system;
- forwarding, by the IMS system, the VoIP session request message to the other VoIP party;
- sending, by the other VoIP party, a message including an SDP answer in response to the SDP offer to the IMS system;
- forwarding the SDP answer, by the IMS system, to the cloud-based customer management system;
- forwarding the SDP answer, by the cloud-based customer management system, to the first device.

It is important to note that in either case, i.e. when the first device is the calling party or when the first device is the called party, the VoIP session is established via the cloud-based customer management system, so that the cloud-based customer management system is aware of the ongoing VoIP call between the first device and the other VoIP party.

Based thereon, in step b) other device associated with the customer are notified of this ongoing VoIP call, in that the cloud-based customer management system sends a call notification message for notifying about the established VoIP session to at least one second device associated with the customer. The call notification message preferably comprises a call identification information identifying the ongoing call between the first device and the other VoIP party, in the following also referred to as call id for short, and/or an information identifying the other VoIP party. Each notified second device is thereby aware of the ongoing VoIP call and thus enabled to influence the ongoing VoIP call.

The call notification message informing about an ongoing call may be sent to the other devices based on a push or on a pull mode. In a push mode, the cloud-based customer management system automatically sends a call notification message, in particular to all other devices associated with customer, which are not party of the ongoing call. In a pull mode, the cloud-based customer management system sends a call notification message to a VoIP capable device or a non-VoIP capable device in response to a request received from the respective device.

A call notification message informing about an ongoing call may in particular be automatically sent by the cloud-based customer management system, when a VoIP session has been established and/or when a device is newly registered on the cloud-based customer management system and/or when a VoIP call is terminated.

Informing another device associated with the customer about an ongoing call, of which the device is not a party, in particular enables the other device to initiate a call transfer of the ongoing call from the VoIP capable device currently being party of the ongoing call, i.e. the first device, to a different VoIP capable device.

Accordingly, the method preferably comprises the step of transferring an ongoing call between the first device and the other VoIP party from the first device to a different VoIP capable device associated with the customer. For initiating the call transfer, the cloud-based customer management system is notified of the VoIP capable device to which the ongoing call is to be transferred. The respective notification message may be sent to the cloud-based customer management system by the VoIP capable device, to which the ongoing call is to be transferred, or by another device, which may also be a non-VoIP capable device associated with the customer.

It is to be noted that the call id is not changed by performing the call transfer, i.e. the call between the calling party and the VoIP capable device, to which the ongoing call is transferred, is associated with the same call id as was the ongoing call before call transfer.

Accordingly, in a preferred embodiment, step c) comprises sending a request to the cloud-based customer management system to initiate a call transfer, said request comprising identification information identifying a VoIP capable device associated with the customer, to which the ongoing call is to be transferred from the first device, and step d) comprises transferring the ongoing call between the first device and the other VoIP party from the first device to the indicated VoIP capable device.

In a further preferred embodiment, the request to initiate a call transfer is sent to the cloud-based customer management system from a smart home device associated with the customer.

As a smart home device preferably a smart home hub may be employed, which is used as a control center for a smart home, and enables the components of a smart home to communicate and respond to each other via communication through a central point. A smart home hub may comprise a dedicated computer appliance, software appliance, or software running on computer hardware, and enables configuration, automation and monitoring of a smart house by communicating and controlling different smart devices, such as smart home appliances, smart sensors, or smart devices, which may be categorized under Internet of things. Alternatively or in addition, a smart home server, in particular a cloud-based smart home server, may be employed, which enables to perform management of smart home appliances and data collection remotely.

It is to be noted that the functionality of a smart home server may be integrated in the cloud-based customer management system.

In an advantageous embodiment, step c) comprises sending customer-related sensor data acquired by at least one sensor device to the cloud-based customer management system, and step d) comprises transferring the ongoing call between the first device and the other VoIP party from the first device to a different VoIP capable device associated with the customer. In other words, a call transfer is initiated depending on customer-related sensor data acquired by the at least one sensor device.

With advantage the acquired customer-related sensor data is collected by a smart home device and the acquired customer-related sensor data or an information derived from the acquired customer-related sensor data is transmitted from the smart home device to the cloud-based customer management system, wherein the smart home device in particular is a smart home hub or a cloud-based smart home server as described above.

The smart home device and/or the at least one sensor device may be a third device as defined above in step c), wherein the third device in particular may not be notified of an ongoing call by a respective call notification message, but provides information to the cloud-based customer management system in regular intervals or event-driven.

In a preferred embodiment, the customer-related sensor data indicate a location of the customer, wherein depending on the customer-related sensor data a VoIP capable device associated with the customer can be identified which is located nearest to the location of the customer.

That way, with advantage signaling of an incoming call may be automatically initiated on the VoIP capable device, which is nearest to the customer's location, or an ongoing call may be automatically transferred from a VoIP capable device currently participating in the ongoing call to the nearest VoIP capable device, when the customer for example moves from one room to another. For such a call transfer with special advantage no active user interaction is necessary, but instead available sensors of a smart home may be utilized for an automatic call transfer.

Also the second devices, i.e. those devices that are informed of an ongoing call by a respective call notification message, may be used as sensors, utilizing for example an integrated microphone for monitoring the sound environment. For this purpose, the call notification message may preferably activate the respective receiving device to act as a sensor device.

It is also conceivable that the cloud-based customer management system controls at least one actuator device associated with the customer, wherein the cloud-based customer management system advantageously transmits a control message for controlling the at least one actuator device, when a VoIP call is signaled, answered and/or terminated, wherein the control message in particular is transmitted via a smart home device, in particular via a smart home hub or a cloud-based smart home server.

For example, running music may be paused, a TV may be muted or dimmed light may be brightened, when an incoming call is signaled or when a call is answered. When the signaling ends or a call is terminated, the previously made changes may automatically be reset.

In a further preferred embodiment, step d) may comprise providing an information to the customer within the ongoing call, wherein the information in particular is provided in the form of an audio announcement. For example, a pre-recorded audio file may be played in response to a pre-defined event being detected by a sensor device of the smart home, wherein such an event may for example be a person being detected at the front door or an alarm being generated by a smoke detector or water leakage detector. For playing an announcement during an ongoing call, the customer may preferably be put on hold, the announcement is played using early media and then the call is resumed.

Such an announcement may also be provided to the customer by the cloud-based customer management system, when there is currently no ongoing VoIP call, wherein in that case preferably a call signaling is started and the message linked to the smart home event is played, when the call is answered. Accordingly, the method preferably comprises the steps of
- sending customer-related sensor data acquired by at least one sensor device to the cloud-based customer management system,
- generating, by the cloud-based customer management system, an information to be provided to the customer depending on the customer-related sensor data,
- establishing a VoIP session between a VoIP capable device that is associated with the customer and the cloud-based customer management system,
- automatically providing the generated information to the customer by the cloud-based customer management system.

In a preferred embodiment, the IMS system preferably is configured to notify the cloud-based customer management system of any VoIP session request message the IMS system receives from a calling party, in particular of any invite message concerning a VoIP call, once the cloud-based customer management system is registered on the IMS system. In particular, the IMS system preferably is configured to notify the cloud-based customer management system of any VoIP session request message, which comprises an address of a VoIP capable device that is associated with the cloud-based customer management system, wherein said address of the VoIP capable device preferably is stored on the IMS system or on a home subscriber server, which is accessible by the IMS system or which is part of the IMS system, together with an information that any VoIP session request message directed to this address is to be forwarded to the cloud-based customer management system.

Preferably, the IMS system only knows that an incoming invite message must be forwarded to the cloud-based customer management system, because the cloud-based customer management system has registered for the respective call number or user. It is to be noted that the IMS system, however, has no information how many and which terminals the cloud-based customer management system manages for the respective registration. A key technical advantage is that all communication between the IMS system and the cloud-based customer management system can be done over persistent WebSockets, wherein preferably one WebSocket from each instance of the IM System to each instance of the cloud-based customer management system may be utilized, in which all registrations between the two affected instances are then processed. Alternatively, also one connection per registration between the affected instances could be utilized.

According to a preferred embodiment, at least two VoIP capable devices may be associated with the customer. Further, a different address, e.g. a phone number and/or an IP address, is assigned to each of the VoIP capable devices, wherein the different addresses are registered together with the identifier of the customer on the cloud-based customer management system.

Furthermore, it should be mentioned, that each of the VoIP capable devices is preferably configured to support the Session Initiation Protocol (SIP). Preferably, each of the VoIP capable devices can be implemented as a softphone on a computer, as a mobile phone, e.g. a smartphone, as a fixed-line telephone or the like.

Preferably, the method may comprise the steps of generating and storing, by the cloud-based customer management system, a call history with respect to the customer. The call history may for example include information about each incoming and/or outgoing VoIP call, an interruption or termination of an established VoIP session, a VoIP call acceptance or the deny of a VoIP request and/or missed calls.

Preferably, the method may comprise the step of providing at least a portion of the stored call history and retrieving, by the customer and by one of the devices associated with the customer, respectively, at least the portion of the stored call history. Preferably, the method may comprise the step of storing at least the portion of the call history in form of a webpage retrievable by the customer.

It should be noted that at least one of the VoIP capable devices and/or the non-VoIP capable device associated with the customer can be implemented to retrieve and download from the cloud-based customer management system at least the portion of the call history belonging to the customer. Therefore, a respective software client (APP) can be stored on and executed by the respective VoIP capable devices and/or the non-VoIP capable device.

According to another preferred aspect a cloud-based customer management system is provided, which is adapted to be registered on an IMS system and which is configured to communicate with the IMS system, wherein on the cloud-based customer management system for at least one VoIP capable device that is associated with a customer an address assigned to the respective VoIP capable device is registered together with an identifier of the customer, wherein the cloud-based customer management system is configured to
- perform signaling for establishing a VoIP session between a first device that is associated with a customer and another VoIP party with the first device being either the calling party or the called party, wherein the first device is a VoIP capable device, and wherein an address is assigned to the first device and registered together with an identifier of the customer on the cloud-based customer management system,
- send a call notification message for notifying about the established VoIP session to at least one second device associated with the customer,
- receive an event notification message from one of the second devices or from at least one third device that is associated with the customer, and
- perform, in response to receiving the event notification message, an action related to the ongoing call between the first device and the other VoIP party.

According to another preferred aspect a communication system is provided, which comprises a cloud-based customer management system as described above, wherein the communication system is adapted to perform a method as described above.

It is to be noted that the communication system and in particular the cloud-based customer management system preferably is configured to perform any aspect described above with respect to the method.

### Brief Description of the Drawings

The invention is described in detail below by way of preferred embodiments in connection with the accompanying drawings, wherein
- Figure 1: shows an exemplary message flow diagram for performing a call transfer after a VoIP communication session has been established, and
- Figure 2: shows a further exemplary message flow diagram for performing a call transfer, wherein the call transfer is initiated by a non-VoIP capable device associated with the customer,
- Figure 3: shows a further exemplary message flow diagram for performing a call transfer, wherein the call transfer is initiated by sensor data of a smart home environment, exemplarily utilizing a local smart home hub,
- Figure 4: shows a further exemplary message flow diagram for performing a call transfer, wherein the call transfer is initiated by sensor data of a smart home environment, exemplarily utilizing a cloud-based smart home server,
- Figure 5: shows a further exemplary message flow diagram for performing a call transfer, wherein the call transfer is initiated by a VoIP capable device acting as a sensor device, and wherein exemplarily a smart home hub is utilized,
- Figure 6: shows an exemplary message flow diagram for providing an alarm notification to the customer during an ongoing VoIP call, wherein exemplarily a smart home hub is utilized.

### Detailed Description of exemplary Embodiments

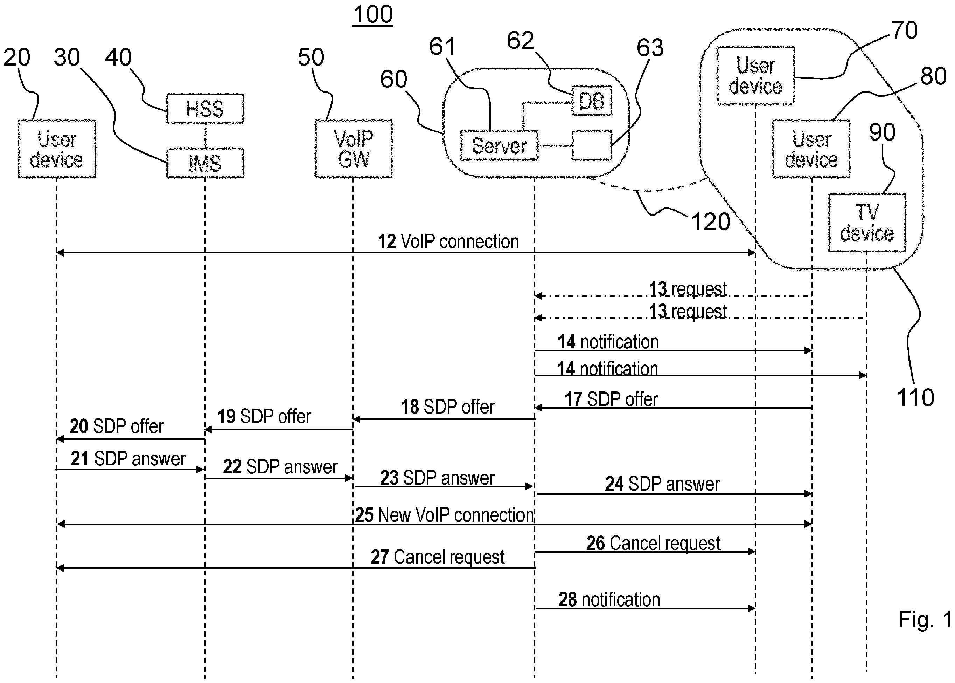

Referring now to figure 1, an exemplary communication system 100 is schematically depicted, which is configured to preferably manage and/or signal VoIP calls and to preferably support the establishment of a real-time VoIP communication sessions between calling parties and called parties. For example, a calling or called party may be a customer and/or at least one device associated with the customer. The customer is symbolized by the outline carrying the reference number 110.

In the preferred embodiment shown in figure 1, two VoIP capable devices 70 and 80 are associated with the customer 110. In practice, at least one VoIP capable device is associated with a customer. For example, VoIP capable device 70 can be implemented as a smartphone, whereas VoIP capable device 80 can be implemented as a softphone on a computer. Preferably, each of the VoIP capable devices 70 and 80 is configured to support at least partially the Session Initiation Protocol (SIP). Furthermore, a different address is assigned to each of the VoIP capable devices 70 and 80. The address may be for example an individual phone number or an IP address.

In particular, the exemplary communication system 100 of figure 1 may comprise a cloud-based call management system 60 and an IP multimedia subsystem 30, also called IMS system. The cloud-based customer management system 60, in the following also called CMS system, is registered on the IMS system 30. For example, an IP address is assigned to the CMS system 60. In particular, the CMS system 60 can be registered on IMS system 30 by using its IP address. The IP address of the CMS system 60 may be stored for example on a home subscriber server 40, which is accessible by the IMS system 60 or which may be part of the IMS system 30. Preferably, the IMS system 30 is configured to notify, once the CMS system 60 is registered on the IMS system 30, the CMS system 60 of any invite message concerning a VoIP call.

At least customer 110 and the VoIP capable devices 70 and 80, associated with the customer 110, are registered on the cloud-based customer management system 60. In order to register customer 110 and the VoIP capable devices 70 and 80, a predetermined identification or identifier of customer 110, the addresses assigned to the VoIP capable devices 70 and 80 and, preferably, a correlation between the identifier of the customer 110 and the respective addresses can be stored on the CMS system 60. Preferably, these data can be stored in a storage 62 implemented on the CMS system 60. For example, the storage 62 may store the data in form of a database or look-up table. It should be noted, that in practice identifications or identifiers of a plurality of customers and the respective addresses of their VoIP capable devices can be managed by the CMS system 60 and stored on the CMS system 60 in the storage 62, respectively. The identifier is preferably a unique identifier of the respective customer.

The cloud-based customer management system 60 may further comprise at least one server device 61 or a network of connected server devices, which is connectable to the storage 62. The CMS system 60 and the server device 61, respectively, may be configured to generate for example a call history with respect to each registered customer. A further storage 63 can be implemented in the CMS system 60, which might be configured to store a call history of each VoIP communication session concerning the respective customer. For example, with respect to each customer registered on the CMS system 60, information about each incoming and/or outgoing VoIP call, the interruption or termination of an established VoIP session, each VoIP call acceptance or the deny of a VoIP request, a missed VoIP call and the like call can be stored as a call history on storage 63. At least some of the information/call history stored with respect to a registered customer can be provided to the respective customer and the registered devices associated with the respective customer, respectively. The information can be provided by and/or stored on the CMS system 60 in form of a webpage retrievable by the respective customer over the Internet, for example.

It should be noted that at least one of the VoIP capable devices 70, 80 associated with the customer 110 can be implemented to retrieve and download from the cloud-based customer management system 60 and the storage 63, respectively, at least the portion of the call history belonging to the customer 110. Therefore, a respective software client (APP) can be stored on and executed by the respective VoIP capable devices 70 and 80.

Preferably, the identifier of the customer 110 and/or the address of at least one of the VoIP capable devices 70 and 80 associated with the customer 110 may be stored on the IMS system 30 and on the home subscriber server 40, respectively, to inform the IMS system 30 that the customer 110 and the respective customer's device are entitled to get access to a VoIP service provided by the communication system 100. Since the CMS system 60 is registered on the IMS system 30 for the customer 110, the information stored on the IMS system 30 preferably is associated with the information that any VoIP session request message the IMS system receives from a calling party, in particular any invite message concerning a VoIP call, which is directed to a VoIP capable device associated with the customer 110, is to be forwarded to the CMS system 60.

It is to be noted that there is advantageously no need for the VoIP capable devices 70 and 80 to be permanently connected to the IMS system 30 in order to receive a VoIP session request message, as would be the case for a VoIP capable device directly registered on the IMS system 30.

In a preferred embodiment, the CMS system 60 and the IMS system 30 can communicate via a VoIP gateway 50, which may belong to the IMS system 30. The operation and general tasks of such a VoIP gateway 50 are known to a person skilled in the art. It is to be noted that the VoIP gateway 50 may also be adapted to perform a protocol conversion between the SIP protocol and a different signaling protocol, so that message transformation is performed with respect to messages that are exchanged between the CMS system 60 and the IMS system 30. If the VoIP gateway 50 is provided with such a functionality, the CMS system 60 might not need to support SIP, but could provide a custom interface, e.g. based on REST (Representational State Transfer), wherein the VoIP gateway 50 performs the necessary transformation. Preferably, the IP address of the VoIP gateway 50 is known to the IMS system 30 and the CMS system 60, whereas the VoIP gateway 50 knows an IP address of the CMS system 60 and an IP address of the IMS system 30 so that messages may be transmitted from the IMS system 30 via the VoIP gateway 50 to the CMS system 60 and vice versa.

Also shown in figure 1 is a VoIP party 20, which may be implemented as a VoIP-capable and SIP (Session Initiation Protocol) capable telephone 20. SIP and IMS is, for example, described by Gerd Siegmund in the reference book "Technik der Netze 2", ISBN 978-3-7785-4063-3, 6. vollig neu bearbeitete und erweiterte Auflage, 2009 Huthig Verlag.

It should be noted, that the CMS system 60 and the VoIP capable devices 70, 80 are each preferably configured to communicate via an IP-based data network 120, e.g. the Internet, with each other. In practice, each of the VoIP capable devices 70, 80 is preferably configured to get access to the IP-based data network 120 via an access network. In the preferred embodiment, the VoIP capable device 70 comprises, for example, a wireless communication interface configured to communicate via a radio access network like LTE with the IP-based data network 120. Furthermore, the VoIP capable device 80 may comprise a fixed-line communication interface configured to communicate via fixed-line access network like DSL with the IP-based data network 120. In a similar way, the VoIP gateway 50 and the CMS system 60 may be each configured to communicate via an IP-based data network, e.g. the Internet, with each other.

In the embodiment shown in Figure 1, also a non-VoIP capable device 90 is associated with the customer 110. The non-VoIP capable device 90 may be a TV device or a smart speaker. It is assumed, that the non-VoIP capable device 90 is a TV device, which does not support the SIP protocol. However, an IP address can be assigned to the TV device 90, and accordingly, the customer 110 and the devices 70, 80 and 90 associated with the customer 110 may be registered on the CMS system 60. For example, an identifier of the customer 110 is stored together with the respective addresses of the VoIP capable devices 70, 80 and the non-VoIP capable device 90 in the storage 62. It should be noted that the non-VoIP capable device 90 associated with the customer 110 can be implemented to retrieve and download from the cloud-based customer management system 60 at least the portion of the call history belonging to the customer 110. Therefore, a respective software client (APP) can be stored on and executed by the non-VoIP capable device.

Now a preferred scenario is described in connection with figure 1 to illustrate the function and operation of the exemplary communication system 100. A scenario is described in connection with figure 1 to illustrate a call transfer being performed after a VoIP communication session has been established.

After a real- time VoIP communication session has been established between the VoIP party 20 and a first device, i.e. the customer's device 70, at step 12, the customer may decide to continue the call on a different device, for example the customer may decide to switch from device 70 to device 80.

For this purpose, the CMS system 60 preferably is configured to send a call notification message for notifying about an ongoing call to at least one VoIP capable device associated with the customer, which is different from the VoIP capable device 70 currently taking part in the established VoIP communication session, and/or to at least one non-VoIP capable device associated with the customer,. The call notification message in particular comprises a call identification information, call id for short, identifying the ongoing call between the calling party 20 and the VoIP capable device 70 and an information identifying the calling party 20.

In a push mode, the call notification messages may be pushed in step 14 to each of the devices 80 and 90. Alternatively, a pull mode may used, in which each device may send in step 13 a request to the CMS system 60, which comprises a query for a list of ongoing calls. In this variant, the CMS system 60 in step 14 sends a notification message to a device in response to receiving a respective request from the device in step 13.

Due to the described notification messages, the devices 80 and 90 are aware of the ongoing call between the party 20 and the device 70. Preferably, a device may display to the customer any ongoing call of which is has been notified by the CMS system 60. In the embodiment shown in figure 1, the customer decides to take the ongoing call on his other VoIP capable device 80 and provides a respective input on device 80.

In step 17, the VoIP capable device 80 then sends a request to take the call to the CMS system 60, said request preferably comprising a respective SDP offer. It is to be noted, that the request including the SDP offer may also include the address of the device 20. The request message is received and analyzed by the CMS system 60 to determine what to do. In the present exemplary case, the CMS system 60 recognizes that the ongoing call shall be transferred to device 80. As a result, the SDP offer is preferably forwarded, at step 18, by the CMS system 60 to the VoIP gateway 50 using the IP address of the VoIP gateway 50. At step 19, the SDP offer is forwarded by the VoIP gateway 50 to the IMS system 30 using the IP address of the IMS system 30. The SDP offer is received and analyzed by the IMS system 30 and is then forwarded to the device 20 in step 20.

In response to the received SDP offer the device 20 generates a respective SDP answer to set up a second media stream and sends the SDP answer in step 21 to the IMS system 30. The IMS system 30 receives and analyzes the SDP answer, which preferably comprises the address of device 80. In the present exemplary case, the IMS system 30 recognizes that a VoIP session shall be established to customer 110 and the device 80, respectively, and that customer 110 is entitled to get access to the VoIP service of the communication system 100. As a result, the SDP answer is preferably forwarded, at step 22, by the IMS system 30 to the VoIP gateway 50 using the IP address of the VoIP gateway 50. At step 23, the SDP answer is preferably forwarded by the VoIP gateway 50 to the CMS system 60 using the IP address of the CMS system 60 and the server 61, respectively.

The CMS system 60 and the server 61, respectively, is configured to analyze the received SDP answer in connection with the data stored in storage 62. As a result, the CMS system 60 recognizes that the address of device 80 included in the SDP answer is linked to customer 110 and that it is related to a call transfer. Accordingly, the CMS system 60 forwards the SDP answer to the VoIP capable device 80, in step 24.

As a result, in step 25 a new VoIP connection is established between the calling device 20 and the VoIP capable device 80.

The VoIP connection that had been established in step 12 is then canceled, wherein for this purpose the CMS system 60 sends respective cancel requests, in step 26 to the VoIP capable device 70 and in step 27 to the device 20. Although not shown in figure 1, the cancel request that is sent in step 27 to the device 20 may preferably be sent via the gateway 50 and the IMS system 30.

When a push mode is used for sending notification messages for informing about ongoing calls, preferably a respective notification message is sent by the CMS system 60 to the device 70 in step 28, informing the device 70 about the ongoing call between the device 20 and the device 80, so that the device 70 is enabled to take the call back, should the customer decide to do so. It is to be noted that there is no need to send new notification messages to the other devices of the customer, in the shown embodiment only one further device 90 being present, since the information transmitted in the earlier notification message is still valid, because the device 20 as participant of the call and the call id have not changed. However, if one of the other devices is adapted to present, which devices of the customer 110 are currently participating in the ongoing call, e.g. by displaying respective information on a display of the device, such device may preferably get a respective push notification from the CMS system 60, so that the device is enabled to update the presentation. This can be negotiated during the device registration. For this purpose, a device may request from the CMS system 60 during device registration to always receive notification messages informing about ongoing calls.

If a call is terminated by one of the parties, the CMS system 60 is aware of that and preferably sends a respective notification message to all of the customer's devices, which were not participants of the now terminated call, in order to respectively update the list of ongoing calls.

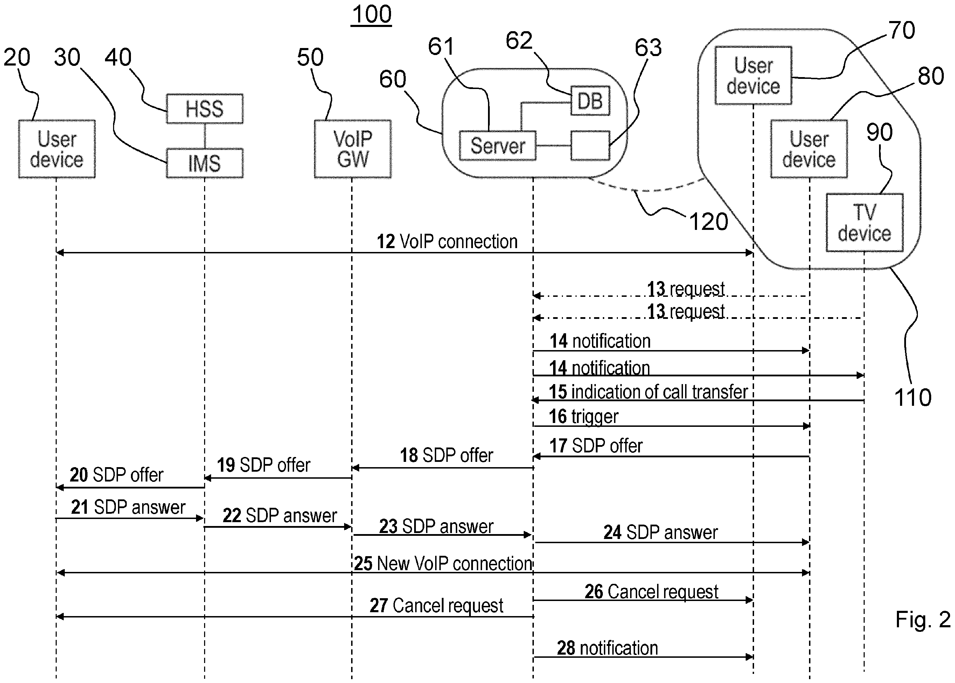

In figure 2 another exemplary message flow diagram for performing a call transfer is shown, wherein in the embodiment shown in figure 2 the call transfer is initiated by a non-VoIP capable device 90 associated with the customer 110.

In the shown embodiment, also the non-VoIP capable device 90, e.g. a television device, is informed about the ongoing call between the device 20 and the VoIP capable device 70 with the respective VoIP communication session being established in step 12. The customer may decide to continue the ongoing call on a different device, which may again be the device 80. In the embodiment shown in figure 2, however, the customer makes the selection, to which device the ongoing call shall be transferred, on a second device, which may be a non-VoIP capable device, such as device 90. By performing step 14 and optionally also step 13, the device 90 has been informed about the ongoing call using one of the above-described push or pull modes.

After the customer has made his selection on device 90, the device 90 in step 15 sends a respective request for call transfer to the CMS system 60, wherein the request comprises an information identifying an ongoing call and an information identifying the VoIP capable device to which the identified ongoing call is to be transferred, in the shown example an information identifying the ongoing call between the device 20 and the VoIP capable device 70 and an information identifying device 80 as the device to take over the call.

The request message is received and analyzed by the CMS system 60 to determine what to do. In the present exemplary case, the CMS system 60 recognizes that the ongoing call between the device 20 and the VoIP capable device 70 shall be transferred to device 80, wherein this information has been received from a different device, i.e. device 90. As a result, the CMS system 60 in step 16 sends a trigger message to device 80, by which the device 80 is triggered to initiate a call transfer of the ongoing call to itself.

In response to receiving the trigger message, the VoIP capable device 80 in step 17 sends a request to take the call to the CMS system 60, said request preferably comprising a respective SDP offer, which preferably includes the address of the device 20. Preferably, the message sent from the device 80 to the CMS system 60 in step 17 is identical to the message, which is sent from the device 80 to the CMS system 60 in step 17 of the embodiment described above with respect to figure 1. Accordingly, the steps 18 to 28 shown in figure 2 are performed in identical or similar manner as described above with respect to figure 1.

It is to be noted that a call transfer may also be performed from the device 20 to a different party registered on the IMS system 30 and connected to the IMS system 30. Such a call transfer may be performed using known SIP methods and may be attended or unattended. Since the CMS system 60 is involved in organizing such a call transfer, the CMS system 60 gets aware of the changed party.

If the notification of ongoing calls is performed in push mode, after such a call transfer being performed, a new notification message, analogous to the above-described step 14, is sent to the respective customer's devices by the CMS system 60, in order to transmit an updated list of ongoing calls, thus informing these devices of the changed calling device. If the pull mode is utilized, the CMS system 60, being aware of the call transfer, will accordingly include respectively updated information, when responding to queries for a list of ongoing calls, which it receives from a customer's device.

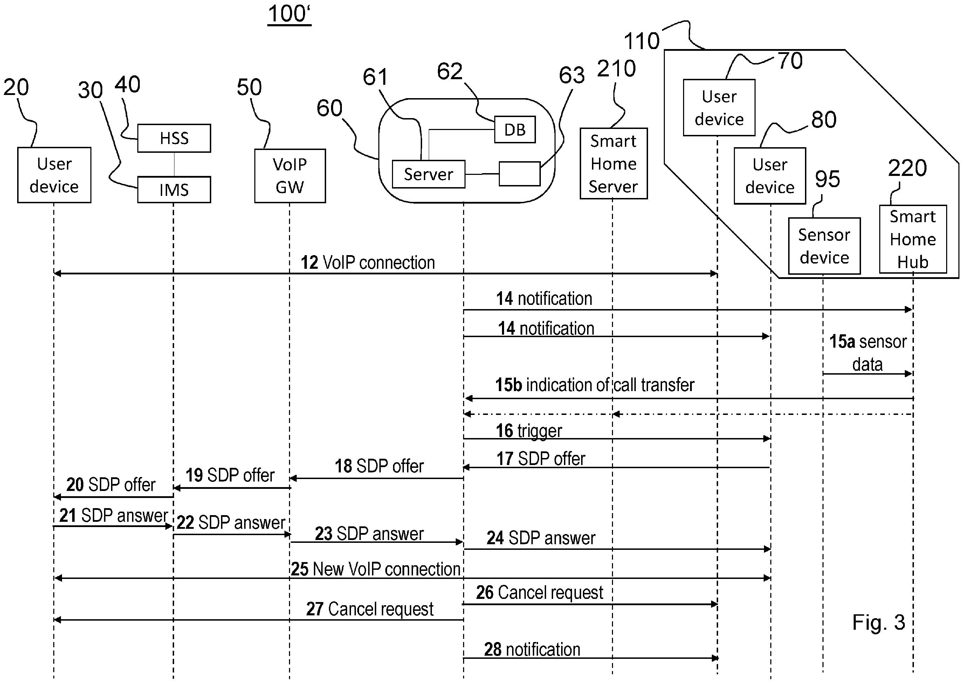

In figure 3 another exemplary message flow diagram for performing a call transfer is shown, wherein in figure 3 an exemplary communication system 100' is schematically depicted, which is similar to the communication system 100 shown in figures 1 and 2.

However, communication system 100' utilizes a smart home environment, which in the shown exemplary embodiment comprises a cloud-based smart home server 210, a smart home hub 220 and a smart home appliance acting as a sensor device 95. In the preferred embodiment shown in figure 3, two VoIP capable devices 70 and 80 are associated with the customer 110, and the sensor device 95 and the smart home hub 220 are also associated with the customer 110. The shown sensor device 95 is only exemplary, in a typical smart home environment there may be provided a plurality of different sensor devices.

In the embodiment of communication system 100' shown in figure 3, the CMS system 60, the VoIP capable devices 70 and 80, the smart home server 210 and the smart home hub 220 are each preferably configured to communicate via an IP-based data network 120, e.g. the Internet, with each other, said IP-based data network 120 not being shown in figure 3. In practice, each of the devices is preferably configured to get access to the IP-based data network 120 via an access network and may for this purpose comprise, for example, a wireless communication interface configured to communicate via a radio access network like LTE with the IP-based data network 120 or may comprise a fixed-line communication interface configured to communicate via a fixed-line access network like DSL with the IP-based data network 120. The sensor device 95 shown in figure 3 preferably is at least configured to communicate with the smart home hub, for example using a wireless LAN (local area network) that may be based on the IEEE 802.11 standards. Alternatively or additionally the sensor device 95 may also be configured to communicate via the IP-based data network 120.

As shown in figure 3, after a real- time VoIP communication session has been established between the VoIP party 20 and a first device, i.e. the customer's device 70, at step 12, a call notification message may be pushed in step 14 to the device 80, in a similar way as described above. In the shown embodiment, in step 14 a call notification message may also be pushed to the smart home hub 220.

In the following a scenario is described, in which the call may be automatically switched from device 70 to device 80 by utilizing the capabilities of a smart home environment. It is assumed that devices 70 and 80 both are VoIP capable devices that are provided with hands-free capability and the customer for example walks from a first room, in which device 70 is located, into a second room, in which the device 80 is located.

In the shown embodiment, the presence of the customer in the vicinity of device 80 is detected using the sensor device 95, wherein any suitable type of sensor may be utilized in the sensor device 95. In the shown embodiment, respective sensor data, which are acquired by the sensor device 95, are transmitted to the smart home hub 220 in step 15a, the smart home hub 220 analyses the received sensor data and determines that the customer is located in the vicinity of device 80 or nearer to device 80 than to device 70. Based thereon, the smart home hub 220 decides that the ongoing call between device 20 and device 70, of which the smart home hub 220 has been notified, shall be switched from device 70 to device 80. For this purpose, the smart home hub 220 in step 15b transmits a respective call transfer request to the CMS system 60 indicating that the ongoing call shall be switched from device 70 to device 80. Indicated by the dash-dotted arrows, transmission of the call transfer request to the CMS system 60 may also be performed via the smart home server 210. In the embodiment shown in figure 3, in particular the smart home hub 220 is involved in performing the call transfer. If the call transfer request is not transmitted via the smart home server 210, the smart home server 210 could be omitted in this embodiment, since it is not involved in performing the call transfer.

In response to receiving the call transfer request, the CMS system 60 in step 16 sends a trigger message to device 80, by which the device 80 is triggered to initiate a call transfer of the ongoing call to itself. The further steps 17 to 28 are performed as already described above. That way, with advantage an automatic call transfer is enabled, for which no user interaction of the customer is necessary.

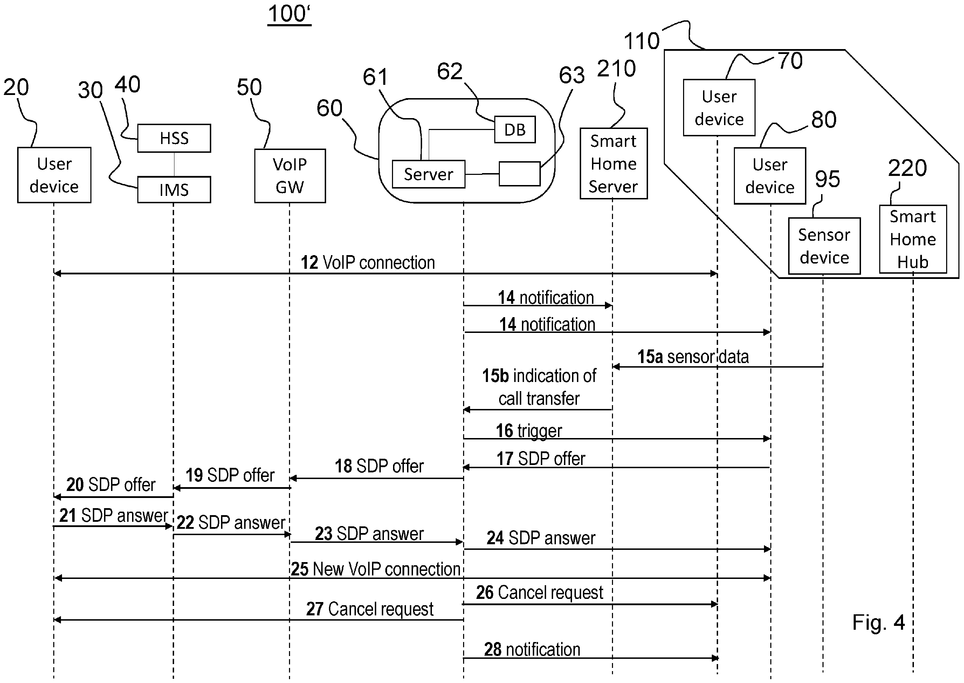

In figure 4 a similar scenario is depicted as in figure 3, wherein in this scenario the smart home hub 220 is not involved in performing the call transfer, but instead the sensor device 95 communicates directly with the smart home server 210, which in particular is provided as a cloud-based smart home server. Hence, in the embodiment shown in figure 4, the smart home hub 220, which is not involved in performing the call transfer, might be omitted. In the preferred embodiment shown in figure 4, in step 14 a call notification message is also transmitted to the smart home server 210. Furthermore, in the shown embodiment the sensor device 95 in step 15a instead of transmitting the acquired sensor data to the smart home hub 220, the sensor device 95 transmits the acquired sensor data to the smart home server 210. The smart home server 210 analyses the received sensor data and decides that the ongoing call between device 20 and device 70, of which the smart home server 210 has been notified, shall be switched from device 70 to device 80. For this purpose, the smart home server 210 in step 15b transmits a respective call transfer request to the CMS system 60 indicating that the ongoing call shall be switched from device 70 to device 80. The remaining steps are identical to the scenario described above with reference to figure 3.

Which of the described scenarios is employed, may depend on a customer-selected configuration of the smart home server 210 and/or the smart home hub 220, wherein the sensor device 95 may preferably be instructed correspondingly by the smart home server 210 and/or by the smart home hub 220.

It is to be noted that a call notification message preferably is transmitted from the CMS system 60 to the smart home server 210 and/or to the smart home hub 220. However, it may be refrained from transmitting a call notification message to the sensor device 95. Instead the sensor device 95 may preferably be controlled by the smart home server 210 and/or by the smart home hub 220, wherein the sensor device 95 in particular may transmit sensor data in pre-defined time intervals or whenever a certain event occurs.

Sensor data may also be pulled from the sensor device 95 by the smart home server 210 and/or by the smart home hub 220.

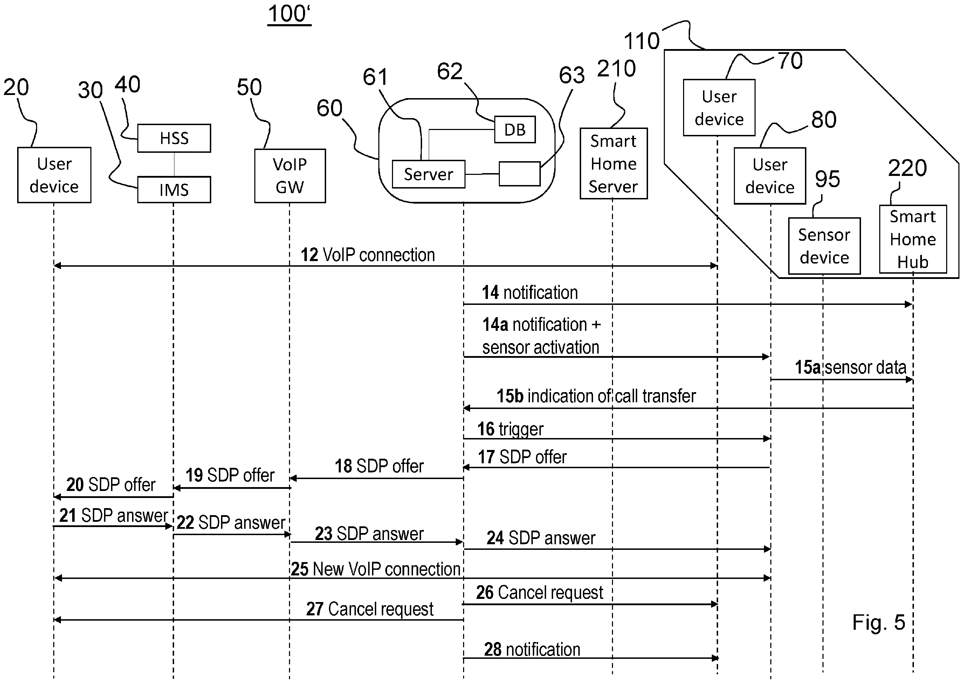

In another preferred embodiment, the call notification message may also be used to activate the respective receiving device to act as a sensor device. An exemplary message flow diagram for a respective exemplary scenario is depicted in figure 5. In the preferred embodiment shown in figure 5, after a real- time VoIP communication session has been established between the VoIP party 20 and device 70, at step 12, a call notification message is pushed in step 14a to the device 80, wherein in the shown embodiment, the call notification message activates the receiving device 80 to act as a sensor device.

When the device 80 is activated to act as a sensor device, it may for example monitor its sound environment using an integrated microphone. In the shown embodiment, the device 80 in step 15a transmits respectively acquired sensor data to the smart home hub 220. As described above, the smart home hub 220, in response to receiving the sensor data, may decide that the ongoing call between device 20 and device 70, of which the smart home hub 220 has been notified in step 14, shall be switched from device 70 to device 80. For this purpose, the smart home hub 220 in step 15b transmits a respective call transfer request to the CMS system 60 indicating that the ongoing call shall be switched from device 70 to device 80. In response to receiving the call transfer request, the CMS system 60 in step 16 sends a trigger message to device 80, by which the device 80 is triggered to initiate a call transfer of the ongoing call to itself. The further steps 17 to 28 are again performed as already described above.

The embodiment shown in figure 5 utilizes the smart home hub 220. As described above with respect to figures 3 and 4, the smart home hub 220 may communicate via the smart home server 210 or the smart home server 210 may be utilized instead of utilizing the smart home hub 220. Hence, in the embodiment shown in figure 5, with advantage a cloud-based smart home environment may be employed utilizing the could-based smart home server 210 instead of the smart home hub 220, wherein the smart home server 210 essentially performs the actions described above for the smart home hub 220, i.e. in step 15a the device 80 may transmit sensor data to the smart home server 210 and, in response, the smart home server 210 may transmit a call transfer request to the CMS system 60 in step 15b.

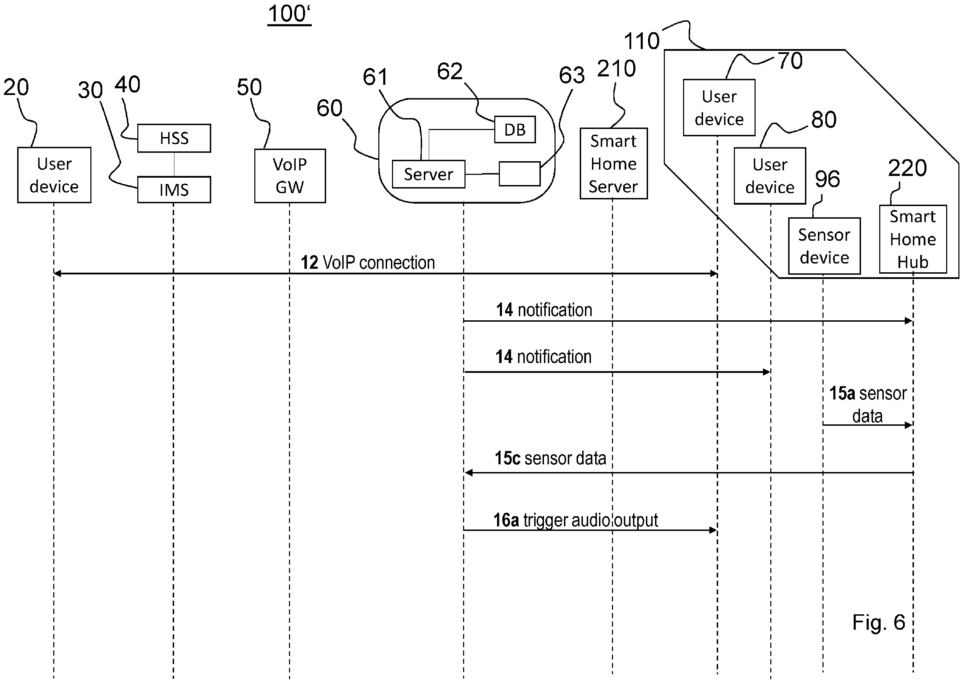

In figure 6 another exemplary message flow diagram is depicted, wherein in the scenario depicted in figure 6, an alarm notification is provided to the customer during an ongoing VoIP call. In the embodiment shown in figure 6, after a real- time VoIP communication session has been established between the VoIP party 20 and device 70, at step 12, a call notification message is pushed in step 14 to the smart home hub 220 and to the device 80. The sensor device 96 in the shown embodiment may for example be provided as a smoke detector or water leakage detector. When the sensor device 96 detects smoke or a water leakage, respectively, it transmits in step 15a respective sensor data to the smart home hub 220, which forwards the sensor data in step 15c to the CMS system 60.

In response to receiving the sensor data, which indicate smoke or a water leakage being detected, the CMS system 60 in step 16a triggers an audio output to be played to the customer by transmitting a respective trigger message to device 70, which participates in the ongoing VoIP call. The audio output may be an alarm announcement provided in the form of a pre-recorded audio file, which is transmitted in the trigger message. Preferably, for playing the announcement during the ongoing call, the customer, i.e. the device 70, may be put on hold, then the announcement is played using early media and after that the call is resumed.

It is noted that such an announcement may also be provided to the customer by the cloud-based customer management system, when there is currently no ongoing VoIP call, wherein in that case, a call signaling is preferably started and the message linked to the smart home event is played, when the call is answered. For this purpose, preferably customer-related sensor data acquired by sensor device 96 is sent to the CMS system 60, either directly or via the smart home server 210 or the smart home hub 220. In response, the CMS system 60 may generate an information to be provided to the customer depending on the customer-related sensor data. In order to provide the information to the customer, a VoIP call may be signaled on all VoIP capable devices of the customer with the CMS system 60 acting as calling party. As soon as the customer answers the call on any of the VoIP capable devices, the generated information is automatically provided to the customer by the CMS system 60.

The embodiment shown in figure 6 again exemplarily utilizes the smart home hub 220. As described above, the smart home hub 220 may communicate via the smart home server 210 or the smart home server 210 may be utilized instead of the smart home hub 220. Hence, also in the embodiment shown in figure 6, with advantage a cloud-based smart home environment may be employed utilizing the could-based smart home server 210. In this alternative variant, the above-described actions of the smart home hub 220 could be performed by the smart home server 210, i.e. in step 15a, the sensor device 96 may transmit sensor data to the smart home server 210 and the smart home server 210 forwards the sensor data in step 15c to the CMS system 60.

## Claims

1. A method for managing at least one VoIP call using a communication system (100; 100') that comprises an IP multimedia subsystem (30) and a cloud-based customer management system (60) registered on the IP multimedia subsystem (30), the method comprising the steps of:
a) establishing a VoIP session between a first device (70) that is associated with a customer (110) and another VoIP party (20), wherein the first device (70) is a VoIP capable device, and wherein an address is assigned to the first device (70) and registered together with an identifier of the customer (110) on the cloud-based customer management system (60), and wherein signaling for establishing the VoIP session is performed via the cloud-based customer management system (60) with the first device (70) being either the calling party or the called party,
b) sending, by the cloud-based customer management system (60), a call notification message for notifying about the established VoIP session to at least one second device (80, 90) associated with the customer (110),
c) sending an event notification message to the cloud-based customer management system (60) from one of the second devices or from at least one third device that is associated with the customer (110),
d) in response to receiving the event notification message, performing, by the cloud-based customer management system (60), an action related to the ongoing call between the first device (70) and the other VoIP party (20).

2. The method of claim 1, wherein the call notification message comprises a call identification information identifying the ongoing call between the first device (70) and the other VoIP party (20) and/or an information identifying the other VoIP party (20).

3. The method of claim 1 or 2, wherein the cloud-based customer management system (60) sends the call notification message to the at least one second device (80, 90) in response to a request received from the at least one second device (80, 90).

4. The method of any one of the preceding claims, wherein step c) comprises sending a request to the cloud-based customer management system (60) to initiate a call transfer, said request comprising identification information identifying a VoIP capable device (80) associated with the customer, to which the ongoing call is to be transferred from the first device (70), and wherein
step d) comprises transferring the ongoing call between the first device (70) and the other VoIP party (20) from the first device (70) to the indicated VoIP capable device (80).

5. The method of claim 4, wherein the request to initiate a call transfer is sent to the cloud-based customer management system (60) from the VoIP capable device (80), to which the ongoing call is to be transferred or by a different device, in particular by a non-VoIP capable device (90) associated with the customer or by a smart home device (220) associated with the customer.

6. The method of any one of claims 1 to 3, wherein step c) comprises sending customer-related sensor data acquired by at least one sensor device (95) to the cloud-based customer management system (60), and wherein step d) comprises transferring the ongoing call between the first device (70) and the other VoIP party from the first device (70) to a different VoIP capable device (80) associated with the customer.

7. The method of claim 6, wherein the acquired customer-related sensor data is collected by a smart home device (210, 220) and the acquired customer-related sensor data or an information derived from the acquired customer-related sensor data is transmitted from the smart home device (210, 220) to the cloud-based customer management system (60), wherein the smart home device in particular is a smart home hub (220) or a cloud-based smart home server (210).

8. The method of claim 7, wherein the customer-related sensor data indicate a location of the customer, and wherein depending on the customer-related sensor data a VoIP capable device associated with the customer can be identified which is located nearest to the location of the customer.

9. The method of any one of the preceding claims, wherein the call notification message activates the respective receiving device to act as a sensor device.

10. The method of any one of the preceding claims, wherein the cloud-based customer management system (60) controls at least one actuator device associated with the customer.

11. The method of claim 10, wherein the cloud-based customer management system (60) transmits a control message for controlling the at least one actuator device, when a VoIP call is signaled, answered and/or terminated, wherein the control message in particular is transmitted via a smart home device (210, 220), in particular via a smart home hub (220) or a cloud-based smart home server (210).

12. The method of any one of the preceding claims, wherein step d) comprises providing an information to the customer within the ongoing call, wherein the information in particular is provided in the form of an audio announcement.

13. The method of any one of the preceding claims, comprising the steps of
- sending customer-related sensor data acquired by at least one sensor device (95) to the cloud-based customer management system (60),
- generating, by the cloud-based customer management system (60), an information to be provided to the customer depending on the customer-related sensor data,
- establishing a VoIP session between a VoIP capable device (70) that is associated with the customer (110) and the cloud-based customer management system (60),
- automatically providing the generated information to the customer by the cloud-based customer management system (60).

14. Cloud-based customer management system (60), adapted to be registered on an IMS system (30) and configured to communicate with the IMS system (30), wherein on the cloud-based customer management system (60) for at least one VoIP capable device that is associated with a customer an address assigned to the respective VoIP capable device is registered together with an identifier of the customer, wherein
the cloud-based customer management system (60) is configured to
- perform signaling for establishing a VoIP session between a first device (70) that is associated with a customer (110) and another VoIP party with the first device being either the calling party or the called party, wherein the first device (70) is a VoIP capable device, and wherein an address is assigned to the first device (70) and registered together with an identifier of the customer (110) on the cloud-based customer management system (60),
- send a call notification message for notifying about the established VoIP session to at least one second device (80, 90) associated with the customer,
- receive an event notification message from one of the second devices or from at least one third device (95) that is associated with the customer (110), and
- perform, in response to receiving the event notification message, an action related to the ongoing call between the first device (70) and the other VoIP party.

15. Communication system (100, 100'), comprising a cloud-based customer management system (60) according to claim 14, wherein the communication system (100, 100') is adapted to perform a method according to any one of claims 1 to 13.
